(19) Europäisches Patentamt
European Patent Office
Office européen des brevets

(11) **EP 3 428 473 A1**

(12) **EUROPEAN PATENT APPLICATION**

(43) Date of publication:
**16.01.2019 Bulletin 2019/03**

(51) Int Cl.:
***F16F 7/01*** *(2006.01)*

(21) Application number: **17001188.6**

(22) Date of filing: **12.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
- **KYB Corporation**
  **Tokyo 105-6111 (JP)**
- **Nagoya Institute Of Technology**
  **Nagoya-shi, Aichi 466-8555 (JP)**

(72) Inventors:
- **Oota, Akihisa**
  **Tokyo, 105-6111 (JP)**

- **Sekine, Shinichi**
  **Tokyo, 105-6111 (JP)**
- **Toyouchi, Atsushi**
  **Tokyo, 105-6111 (JP)**
- **Fukuzawa, Yuji**
  **Nagano, 389-0688 (JP)**
- **Ido, Yasushi**
  **Nagoya-shi, Aichi, 466-8555 (JP)**
- **Iwamoto, Yuhiro**
  **Nagoya-shi, Aichi, 466-8555 (JP)**

(74) Representative: **Müller-Boré & Partner**
**Patentanwälte PartG mbB**
**Friedenheimer Brücke 21**
**80639 München (DE)**

(54) **ROTARY DAMPER**

(57)     A rotary damper which can successfully generate damping force without using a working fluid is provided.

A rotary damper 1 includes a cylinder 10, a rotor 40, and elastomer particles 90. The rotor 40 which is rotatable around a rotational central axis is disposed in the cylinder 10. The elastomer particles 90 have elasticity, and the plurality of elastomer particles 90 are filled in the cylinder 10.

Fig.1A

Fig.1B

**Description**

TECHNICAL FIELD

The present invention relates to a rotary damper.

BACKGROUND ART

Non-Patent Literature 1 discloses a conventional rotary damper. The rotary damper has a structure in which steel balls serving as particles are filled in a space surrounded by a cylinder and one pair of caps and a rotor rotates therein.
In the rotary damper, when the rotor is rotated with respect to the cylinder, the particles flow with the movement of the rotor, and torque is generated in a direction opposite to a rotational direction of the rotor. That is, since this rotary damper does not use a working fluid, it is possible to generate torque without causing a working fluid to flow outside. The torque thus generated is damping force acting on the rotor in a direction to suppress rotation of the rotor.

CITATION LIST

PATENT LITERATURE

Non-Patent Literature 1: Koichi HAYASHI, Yasushi IDO, "Effect of Rotor Position on Damping Force Properties of Rotary Damper Using Particle Assemblage" Japan Society of Mechanical Engineers Tokai Branch 65th General Assembly and Lectures Proceedings (March 17 to 18, 2004) No. 163-1

SUMMARY OF INVENTION

TECHNICAL PROBLEM

In a rotary damper according to Non-Patent Literature 1, steel balls serving as particles are filled in a cylinder. The steel balls have no flexibility. Therefore, when a rotor rotates in a cylinder, the particles are pushed by the rotor, whereby seizure between the adjacent particles may be caused. Accordingly, there is a possibility that the rotor cannot rotate and movement of the rotor is hindered with the result that the rotary damper cannot successfully generate torque (damping force). Furthermore, lubricant oil needs to be added into the cylinder together with the particles in this rotary damper in order to prevent the seizure between the particles.
The present invention has been made in consideration of the above conventional circumstances and has an object to provide a rotary damper which can successfully generate damping force without using a working fluid.

SOLUTION TO PROBLEM

The rotary damper according to the present invention includes a case, a rotor, and particles. The rotor which is rotatable around a rotational central axis is disposed in the case. The particles have elasticity and are filled in the case.
In the rotary damper, when the rotor rotates around the rotational central axis, the particles filled in the case are elastically deformed. Frictional force between the particles, frictional force between the particles and the case or the rotor, and elastic repulsive force of the particles generated at this time allow the rotary damper to generate damping force.
Thus, the rotary damper according to the present invention can successfully generate damping force without using a working fluid.
The rotor of the rotary damper according to the present invention may have a cross-sectional shape orthogonal to the rotational central axis which cross-sectional shape is circular, elliptical, or polygonal. In this case, the area of a surface in contact with the particles can be changed by changing the cross-sectional shape of the rotor into a circular shape, an elliptical shape, or a polygonal shape, whereby the degree of elastic deformation of the particles filled in the case can be variably changed. In this manner, frictional force between the particles and frictional force between the particles and the case or the rotor can be changed, with the result that characteristics of damping force generated by the rotary damper can be variably changed.
The rotor of the rotary damper according to the present invention may have a surface on which at least either a groove or a protrusion is formed in an axial direction thereof. In this case, the area of the surface in contact with the particles is more variably changed by forming the groove, the protrusion, and the like on the surface of the rotor, whereby the degree of elastic deformation of the particles filled in the case can be more variably changed. In this manner, the frictional force between the particles and the frictional force between the particles and the case or the rotor can be changed, with the result that the characteristics of damping force generated by the rotary damper can be more variably changed.

BRIEF DESCRIPTION OF THE DRAWINGS

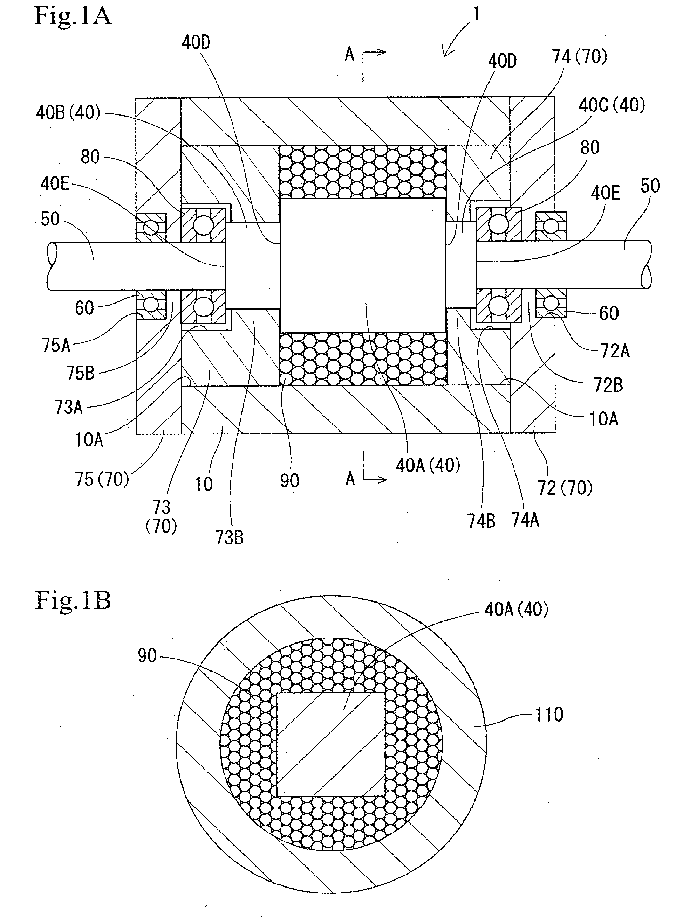

Figs. 1A and 1B are sectional views showing a rotary damper according to a first embodiment, in which Fig. 1A is the sectional view in a direction of a rotational central axis of a rotor and Fig. 1B is a sectional view along an A - A line in Fig. 1A.

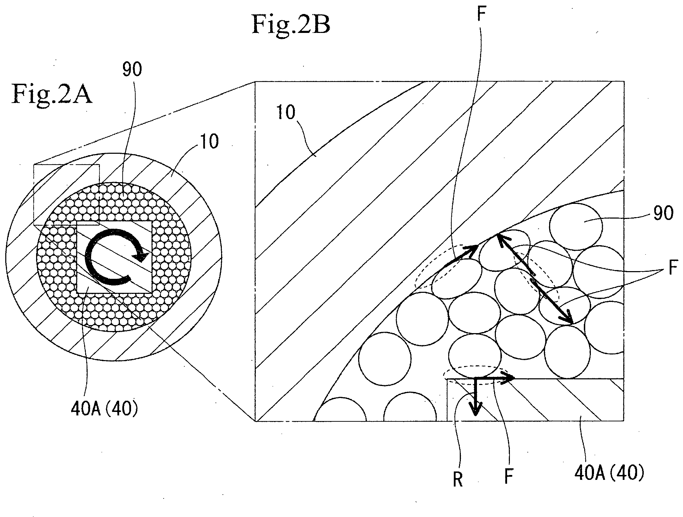

Fig. 2A is a sectional view along an A - A line in Fig. 1A, and Fig. 2B is a partially enlarged view enlarging a part of Fig. 2A.

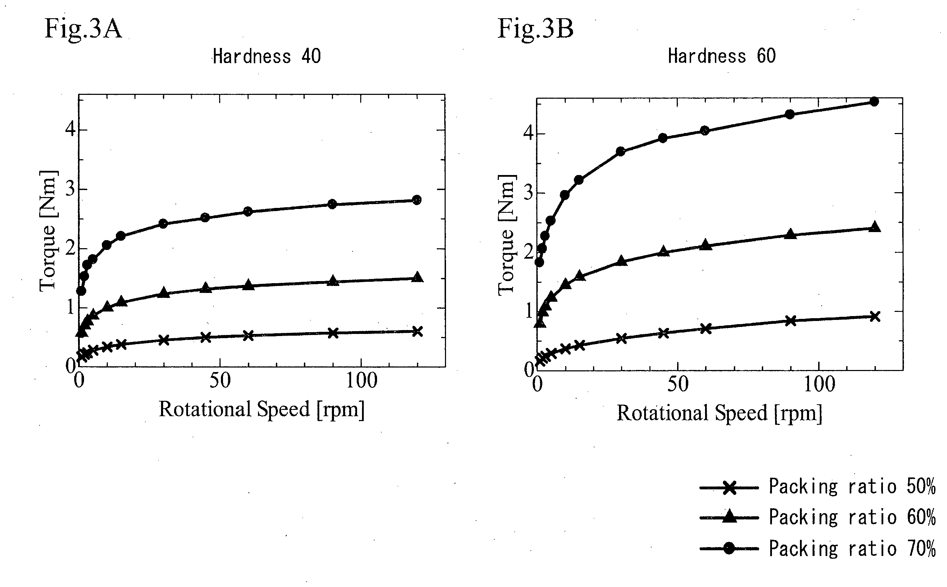

Figs. 3A and 3B are graphs showing relationship between rotational speed of a rod and a rotor and torque (damping force) when elastomer particles having a hardness of 40 and elastomer particles having a hardness of 60 are filled in a cylinder of the rotary damper according to the first embodiment at packing ratios of 50, 60, and 70%, respectively, in which Fig. 3A shows the case in which the hardness of the elastomer particles is 40 and Fig. 3B shows the case in which the hardness of the elastomer particles is 60.

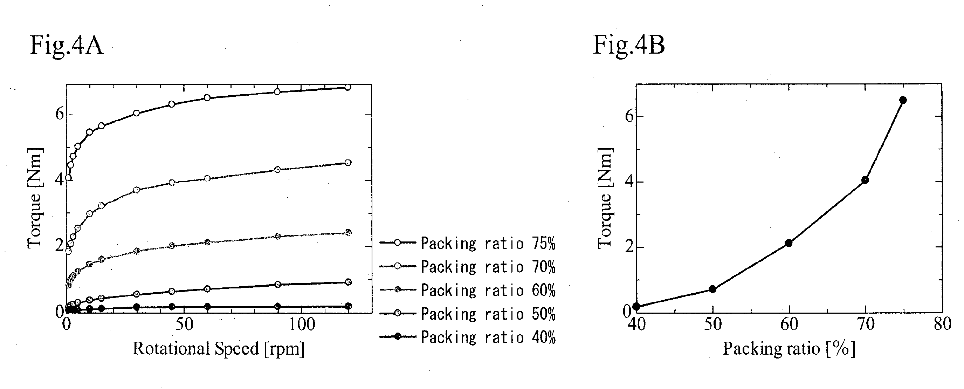

Figs. 4A and 4B are graphs showing relationship of torque (damping force) to rotational speed and relationship of torque (damping force) to packing ratio when elastomer particles having a hardness of 60 are filled in the rotary damper according to the first embodiment at packing ratios of 40, 50, 60, 70, and 75%, in which Fig. 4A shows relationship between rotational speed of a rod and a rotor and torque (damping force) and Fig. 4B is a graph showing relationship between packing ratio of elastomer particles and torque (damping force) when the rotational speed of the rod and the rotor is 60 (rpm).

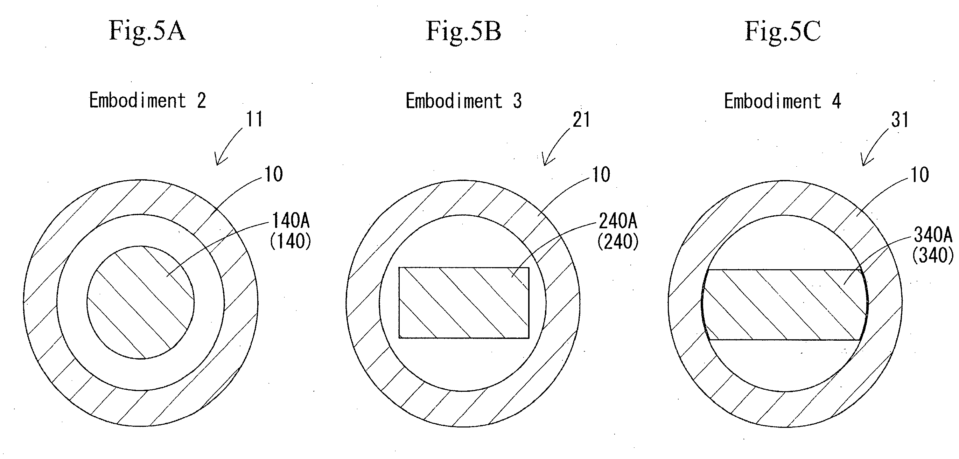

Figs. 5A to 5C are sectional views of rotary dampers according to second to fourth embodiments, in which Fig. 5A shows a cross-sectional shape of a central part orthogonal to a rotational central axis of a rotor in the second embodiment, Fig. 5B is a cross-sectional shape of a central part orthogonal to a rotational central axis of a rotor in the third embodiment, and Fig. 5C is a cross-sectional shape of a central part orthogonal to a rotational central axis of a rotor in the fourth embodiment.

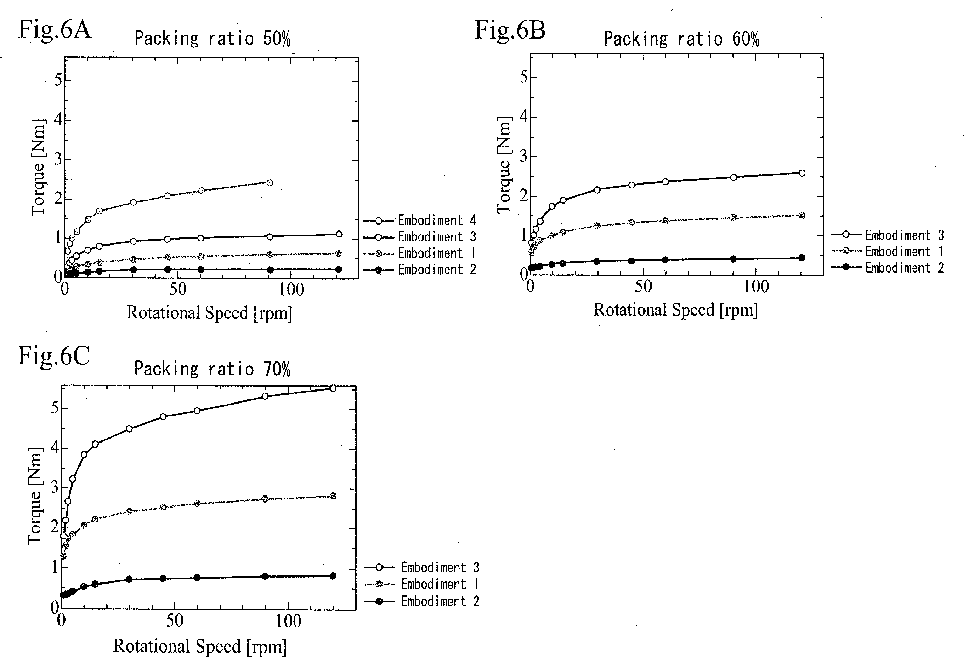

Figs. 6A to 6C are graphs showing relationship between rotational speed of a rod and a rotor and torque (damping force) in the rotary dampers according to the first to fourth embodiments when elastomer particles having a hardness of 40 are filled in the cylinders at packing ratios of 50, 60, and 70%, respectively, in which Fig. 6A shows the case in which the packing ratio is 50%, Fig. 6B shows the case in which the packing ratio is 60%, and Fig. 6C shows the case in which the packing ratio is 70%.

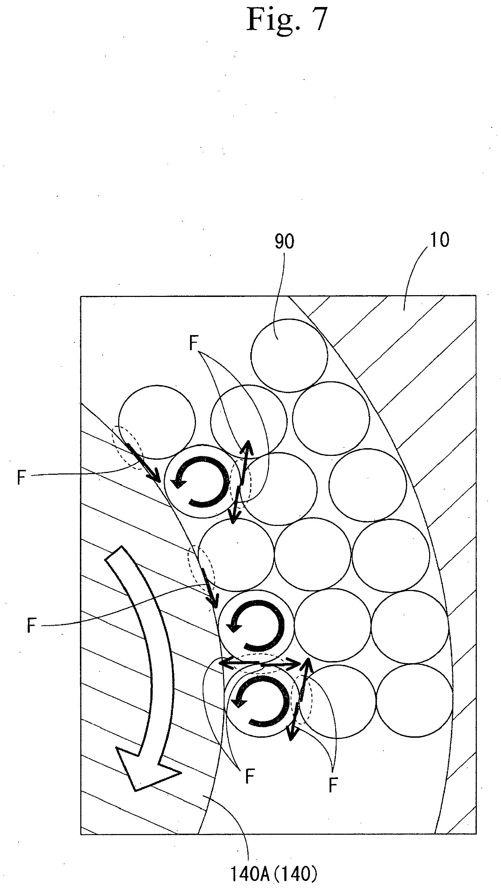

Fig. 7 is a partially enlarged view of a cross-sectional shape of the central part orthogonal to the rotational central axis of the rotor of the rotary damper according to the second embodiment.

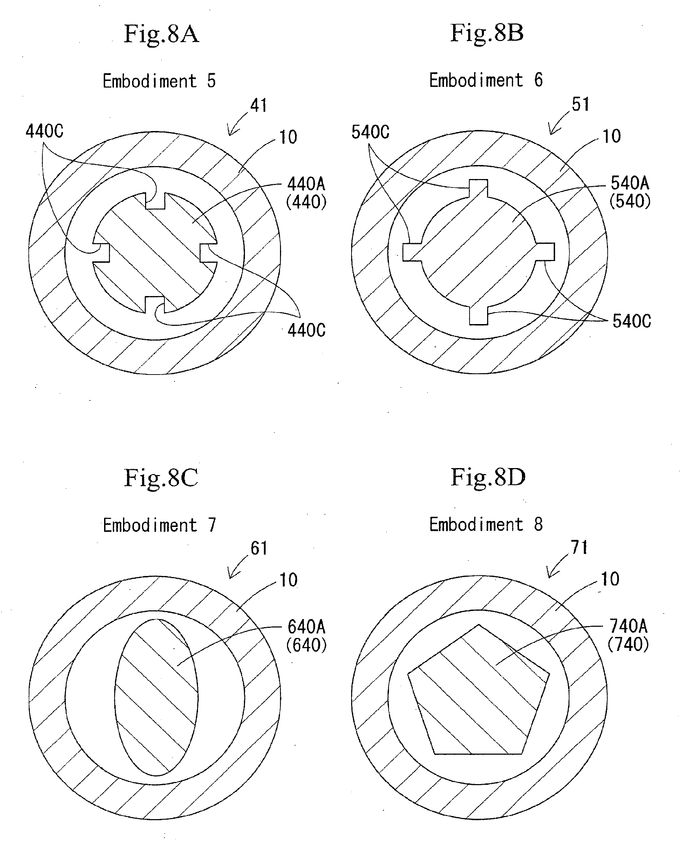

Figs. 8A to 8D are sectional views of rotary dampers according to fifth to eighth embodiments, in which Fig. 8A shows a cross-sectional shape of a central part orthogonal to a rotational central axis of a rotor in the fifth embodiment, Fig. 8B is a cross-sectional shape of a central part orthogonal to a rotational central axis of a rotor in the sixth embodiment, Fig. 8C is a cross-sectional shape of a central part orthogonal to a rotational central axis of a rotor in the seventh embodiment, and Fig. 8D is a cross-sectional shape of a central part orthogonal to a rotational central axis of a rotor in the eighth embodiment.

DESCRIPTION OF EMBODIMENTS

Embodiments of a rotary damper according to the present invention will be described below with reference to the accompanying drawings.

<First Embodiment>

A rotary damper 1 according to a first embodiment, as shown in Fig. 1A, includes a cylinder 10 serving as a case, a first rod guide 75, a second rod guide 72, a third rod guide 73, a fourth rod guide 74, a rotor 40, a rod 50, and elastomer particles 90 serving as particles. The cylinder 10 has a cylindrical shape having openings at both ends thereof.

The first rod guide 75 has a disk-like shape, and is coupled to the cylinder 10 so that the other surface of the first rod guide 75 abuts against one end face of the cylinder 10 so as to close one side of the cylinder 10. The center of the disk-like shape of the first rod guide 75 is formed with a first through hole 75A penetrating through the first rod guide 75 in a thickness direction thereof. The first through hole 75A on the other surface side of the first rod guide 75 is formed with a first stopper 75B which extends inward from the inner peripheral surface of the first through hole 75A in a flat plate shape. The inner diameter of the first stopper 75B is slightly larger than the outer diameter of the rod 50 (which will be described later). A shield bearing 60 is fitted in the first through hole 75A, and one surface of the shield bearing 60 abuts against one surface of the first stopper 75B.

The second rod guide 72 has a disk-like shape, and is coupled to the cylinder 10 so that one surface of the second rod guide 72 abuts against the other end face of the cylinder 10 so as to close the other side of the cylinder 10. The center of the disk-like shape of the second rod guide 72 is formed with a second through hole 72A penetrating through the second rod guide 72 in a thickness direction thereof. An intermediate part of the second through hole 72A penetrating through the second rod guide 72 in the thickness direction is formed with a second stopper 72B which extends inward from the inner peripheral surface of the second through hole 72A in a flat plate shape. The inner diameter of the second stopper 72B is slightly larger than the outer diameter of the rod 50 (which will be described later). The inner diameter of the second through hole 72A in an area between one surface of the second stopper 72B and one surface of the second rod guide 72 (hereinafter to be referred to as one side of the second through hole 72A) is larger than that in an area between the other surface of the second stopper 72B and the other surface of the second rod guide 72 (hereinafter to be referred to as the other side of the second through hole 72A). The shield bearing 60 is fitted in the other side of the second through hole 72A, and one surface of the shield bearing 60 abuts against the other surface of the second stopper 72B.

A third rod guide 73 has a disk-like shape thicker than each of the first rod guide 75 and the second rod guide 72. The third rod guide 73 has a disk-like shape having an outer diameter almost equal to the inner diameter of the cylinder 10. The third rod guide 73 is fitted in one opening end 10A of the cylinder 10 and coupled to the first rod guide 75 with one surface of the disk-like shape thereof abutting against the other surface of the first rod guide 75. The center of the disk-like shape of the third rod guide 73 is formed with a third through hole 73A penetrating through the third rod guide 73 in a thickness direction thereof. The third through hole 73A on the other surface side of the third rod guide 73 is formed with a third stopper 73B which extends inward from the inner peripheral surface of the third through hole 73A in a flat plate shape. The inner diameter of the third stopper 73B is slightly larger than the outer diameter of a first end 40B of the rotor 40 (which will be described later).

A fourth rod guide 74 has a disk-like shape thicker than each of the first rod guide 75 and the second rod guide 72 and thinner than the third rod guide 73. The fourth rod guide 74 has a disk-like shape having an outer diameter almost equal to the inner diameter of the cylinder 10. The fourth rod guide 74 is fitted in the other opening end 10A of the cylinder 10 and coupled to the second rod guide 72 with the other surface of the disk-like shape thereof abutting against one surface of the second rod guide 72. The center of the disk-like shape of the fourth rod guide 74 is formed with a fourth through hole 74A penetrating through the fourth rod guide 74 in a thickness direction thereof. The fourth through hole 74A on one surface side of the fourth rod guide 74 is formed with a fourth stopper 74B which extends inward from the inner peripheral surface of the fourth through hole 74A in a flat plate shape. The inner diameter of the fourth stopper 74B is slightly larger than the outer diameter of a second end 40C of the rotor 40.

The rotor 40 has a central part 40A, the first end 40B, and the second end 40C. The central part 40A, as shown in Figs. 1A and 1B, is disposed between the other surface of the third rod guide 73 and one surface of the fourth rod guide 74, and has a cross-sectional shape orthogonal to the rotational central axis of the rotor 40 (hereinafter to be referred to as a cross-sectional shape) which is a square shape that is a polygonal shape (see Fig. 1B). Ridges (hereinafter to be referred to ridges) are formed between two adjacent surfaces of the four surfaces forming the square shape.

Both ends of the central part 40A in the direction of the rotational central axis of the rotor 40 are each formed with a first plane 40D orthogonal to the rotational central axis of the rotor 40.

The first end 40B and the second end 40C have columnar shapes and extend from the centers of the two first planes 40D of the central part 40A respectively in opposite directions. The first end 40B and the second end 40C have respective sides away from the central part 40A which sides are each formed with a second plane 40E orthogonal to the rotational central axis of the rotor 40.

The rod 50 extends from the centers of the second planes 40E of the first end 40B and the second end 40C. The rod 50 is coaxial with the first end 40B and the second end 40C. The rotor 40 is disposed in the cylinder 10.

The rod 50 is rotatably coupled to the first rod guide 75 and the second rod guide 72 via the shield bearings 60 fitted in the first rod guide 75 and the second rod guide 72 respectively. The first end 40B and the second end 40C are rotatably inserted into the third stopper 73B of the third through hole 73A of the third rod guide 73 and the fourth stopper 74B of the fourth through hole 74A of the fourth rod guide 74, respectively.

A thrust bearing 80 is disposed inside the third through hole 73A of the third rod guide 73 and is sandwiched by the second plane 40E of the first end 40B inserted into the third stopper 73B and the other surface of the first rod guide 75. The thrust bearing 80 is also disposed inside the fourth through hole 74A of the fourth rod guide 74 and is sandwiched by the second plane 40E of the second end 40C inserted into the fourth stopper 74B and one surface of the second rod guide 72. In this manner, the rod 50 and the rotor 40 both are rotatable around the rotational central axis.

A plurality of elastomer particles 90 each have a spherical shape. The elastomer particles 90 are elastic bodies made of silicone rubber having a predetermined durometer A hardness (hereinafter to be referred to as a hardness). That is, the elastomer particles 90 have elasticity. The elastomer particles 90 are filled in a space surrounded by the cylinder 10, the third rod guide 73, and the fourth rod guide 74 at a predetermined packing ratio.

In this case, the packing ratio is expressed by the following equation (1). A filling volume is the volume of the space in which the elastomer particles 90 are filled.

[Mathematical Equation 1]

$$\text{Packing ratio} = \frac{\text{Mass of elastomer particles 90}}{\text{Filling volume} \times \text{Density of elastomer particles 90}} \cdots (1)$$

A mechanism which allows the rotary damper 1 to generate torque (damping force) will be described here. As shown in Figs. 2A and 2B, when the rotor 40 rotates in the cylinder 10, the elastomer particles 90 filled in the cylinder 10 flow. At this time, frictional force F is generated between the inner peripheral surface of the cylinder 10 and the elastomer particles 90 in contact with the inner peripheral surface of the cylinder 10, between the adjacent elastomer particles 90, and between the surface of the central part 40A of the rotor 40 and the elastomer particles 90 in contact with the surface of the central part 40A of the rotor 40. Furthermore, the elastomer particles 90 in contact with the surface of the central part 40A of the rotor 40 are pushed and flattened by the central part 40A of the rotating rotor 40. At this time, elastic repulsive force R generated by the elastomer particles 90 pushed and flattened by the central part 40A of the rotor 40 pushes back the central part 40A of the rotor 40. That is, torque (damping force) is generated in the direction opposite to the rotational direction of the rotor 40 in the rotary damper 1 on the basis of the frictional force F and the elastic repulsive force R generated as described above. The torque (damping force) thus generated acts on the rotor 40 in a direction to suppress rotation of the rotor 40.

Furthermore, when steel balls not having flexibility are used as particles as described in Non-Patent Literature 1, the steel balls are brought into point contact with adjacent counterparts. In contrast to this, when the elastomer particles 90 having elasticity are used as particles, the elastomer particles 90 are pushed and flattened to be elastically deformed, thereby being brought into area contact with counterparts such as the inner peripheral surface of the cylinder 10, the adjacent elastomer particles 90, and the surface of the central part 40A of the rotor 40. Therefore, a larger torque (damping force) is generated as compared with the case using steel balls. Since the magnitude of frictional force F changes depending on the degree of elastic deformation of the elastomer particles 90, the magnitude of torque (damping force) to be generated can be widely changed.

Furthermore, the elastomer particles 90 have a mass smaller than that of the steel balls described in Non-Patent Literature 1. Therefore, when the elastomer particles 90 are used as particles, an influence of gravity is smaller than that when the steel balls are used. Therefore, the magnitude of torque (damping force) to be generated can be less likely to be dependent on an angle of the rotational central axis of the rotor 40 (i.e., angle at which the rotary damper is installed).

Figs. 3A and 3B show the relationship between speed of rotation of the rod 50 and the rotor 40 of the rotary damper 1 (hereinafter to be referred to as rotational speed) and torque (damping force) when the elastomer particles 90 having a hardness of 40 and a hardness of 60 are filled in the cylinder 10 at packing ratios of 50, 60, and 70%, respectively. More specifically, the rotational speed of the rod 50 and the rotor 40 is changed into 1, 2, 3, 5, 10, 15, 30, 45, 60, 90, 120 (rpm) to measure torques.

As shown in Figs. 3A and 3B, the generated torque (damping force) increases as the rotational speed increases. Furthermore, the degree of increase in the generated torque (damping force) decreases as the rotational speed increases. Furthermore, the magnitude of the generated torque (damping force) increases as the packing ratio increases. Furthermore, when the packing ratio is same, the generated torque (damping force) is larger in the case using the elastomer particles 90 having a hardness of 60 than in the case using the elastomer particles 90 having a hardness of 40.

Fig. 4A shows the relationship between rotational speed of the rod 50 and the rotor 40 of the rotary damper 1 and torque (damping force) when the elastomer particles 90 having a hardness of 60 are filled in the cylinder 10 at packing ratios of 40, 50, 60, 70, and 75%, respectively. Fig. 4B shows the relationship between packing ratio of the elastomer particles 90 and damping force when the rotational speed of the rod 50 and the rotor 40 is 60 (rpm).

As shown in Fig. 4A, at any packing ratio, the generated torque (damping force) increases as the rotational speed increases. Furthermore, the degree of increase in the generated torque (damping force) decreases as the rotational speed increases. Furthermore, when the rotational speed is same, the larger the packing ratio becomes, the larger magnitude of the generated torque (damping force) becomes. Furthermore, as shown in Fig. 4B, the degree of increase in the generated torque (damping force) increases as the packing ratio increases.

As described above, when the rod 50 and the rotor 40 rotate around the rotational central axis of the rotor 40, the plurality of elastomer particles 90 filled in the cylinder 10 are elastically deformed in the rotary damper 1. Frictional force F between the elastomer particles 90 and elastic repulsive force R of the elastomer particles 90 generated at this time allow the rotary damper 1 generate torque (damping force).

Thus, the rotary damper 1 according to the present invention can successfully generate torque (damping force) without using a working fluid.

<Second to Fourth Embodiments>

Next, in order to compare relationship between rotational speed of the rod and the rotor and torque (damping force) when the rotor have different cross-sectional shapes, rotary dampers 11, 21, and 31 according to second to fourth embodiments each comprising a rotor having a cross-sectional shape different from that of the rotor 40 according to the first embodiment were made as shown in Figs. 5A to 5C. Other components are same as those in the first embodiment. The same components as in the first embodiment are denoted by the same reference symbols respectively, and a detailed description thereof will be omitted.

As shown in Fig. 5A, the cross-sectional shape of a central part 140A of a rotor 140 in the rotary damper 11 according to the second embodiment is a circular shape.

As shown in Fig. 5B, the cross-sectional shape of a central part 240A of a rotor 240 in the rotary damper 21 according to the third embodiment is a rectangular shape.

As shown in Fig. 5C, the cross-sectional shape of a central part 340A of a rotor 340 in the rotary damper 31 according to the fourth embodiment is a shape obtained by connecting two arcuate surfaces being along the inner peripheral surface of the cylinder 10 and located on opposite sides with respect to the rotational central axis of the rotor 340 by two parallel planes.

Figs. 6A to 6C show the results obtained by measuring relationship between the rotational speed of the rod 50 and the rotors 40, 140, 240, and 340 of the rotary dampers 1, 11, 21, and 31 and torque (damping force) at the respective packing ratios, when the elastomer particles 90 having a hardness of 40 are filled in the cylinders 10 of the rotary dampers 1, 11, 21, and 31 according to the first to fourth embodiments at packing ratios of 50, 60, and 70%, respectively.

As shown in Figs. 6A to 6C, at any packing ratio, the generated torque (damping force) increases as the rotational speed increases. Furthermore, the degree of increase in the generated torque (damping force) decreases as the rotational speed increases. Furthermore, in the same embodiment, the larger the packing ratio becomes, the larger the magnitude of the generated torque (damping force) becomes. Since the torque (damping force) is over a measurement allowable level of the instrument measuring the torque (damping force), the torque (damping force) in the rotary damper 31 according to the fourth embodiment are not measured at 120 (rpm) when the packing ratio is 50%, and when the packing ratios are 60% and 70%.

A mechanism which allows the rotary damper 11 according to the second embodiment to generate torque (damping force) will be described here. As shown in Fig. 7, when the rotor 140 rotates in the cylinder 10, frictional force F is generated between the outer peripheral surface of the central part 140A of the rotor 140 and the elastomer particles 90 in contact with the outer peripheral surface of the central part 140A of the rotor 140. At this time, the elastomer particles 90 in contact with the outer peripheral surface of the central part 140A of the rotor 140 move in a rotational direction of the rotor 140 while rotating. Furthermore, when the elastomer particles 90 in contact with the outer peripheral surface of the central part 140A of the rotor 140 rotate, the frictional force F is also generated between the rotating elastomer particles 90 and the elastomer particles 90 adjacent to the rotating elastomer particles 90. In the rotary damper 11 according to the second embodiment, even though the central part 140A of the rotor 140 rotates, the elastomer particles 90 are not pushed and flattened. Therefore, in the rotary damper 11 according to the second embodiment, the elastomer particles 90 do not generate elastic repulsive force. That is, in the rotary damper 11 according to the second embodiment, the torque (damping force) is generated in the direction opposite to the rotational direction of the rotor 140 on the basis of the frictional force F generated as described above. The torque (damping force) thus generated acts on the rotor 140 in a direction to suppress rotation of the rotor 140.

When the rod and the rotors 240 and 340 rotate around the respective rotational central axes of the rotors, the plurality of elastomer particles 90 filled in the cylinder 10 are elastically deformed in the rotary dampers 21 and 31. The frictional force F between the elastomer particles 90 and elastic repulsive force of the elastomer particles 90 allow the rotary dampers 11, 21, and 31 to generate torque (damping force).

Thus, the rotary dampers 11, 21, and 31 according to the present invention can also successfully generate torque (damping force) without using a working fluid.

Furthermore, the rotors 140, 240, and 340 of the rotary dampers 11, 21, and 31 have respective cross-sectional shapes orthogonal to the rotational central axes which are a circular shape or a rectangular shape that is a polygonal shape. Therefore, the area of a surface in contact with the elastomer particles can be changed by changing the cross-sectional shape of the rotor into a circular shape or a polygonal shape like the rotors 140, 240, and 340, whereby the degree of elastic deformation of the elastomer particles filled in the cylinder 10 can be variably changed. As the result, the characteristics of torque (damping force) generated by the rotary damper can be variably changed.

<Fifth to Eighth Embodiments>

As shown in Figs. 8A to 8D, the fifth to eighth embodiments are different from the first to fourth embodiments in the cross-sectional shapes of the central parts of the rotors in rotary dampers 41, 51, 61, and 71. Other components are same as those in the first to fourth embodiments. The same components as in the first to fourth embodiments are denoted by the same reference symbols respectively, and a detailed description thereof will be omitted.

As shown in Fig. 8A, the cross-sectional shape of a central part 440A of a rotor 440 in the rotary damper 41 according to the fifth embodiment is provided with a plurality of grooves 440C formed on a circular outer peripheral surface thereof in the axial direction.

As shown in Fig. 8B, the cross-sectional shape of a central part 540A of a rotor 540 in the rotary damper 51 according to the sixth embodiment is provided with a plurality of protrusions 540C formed on a circular outer peripheral surface thereof in the axial direction.

As shown in Fig. 8C, the cross-sectional shape of a central part 640A of a rotor 640 in the rotary damper 61 according to the seventh embodiment is an elliptical shape.

As shown in Fig. 8D, the cross-sectional shape of a central part 740A of a rotor 740 in the rotary damper 71 according to the eighth embodiment is a pentagonal shape that is a polygonal shape.

When the rod and the rotors 440, 540, 640, and 740 rotate around the respective rotational central axes of the rotors, the plurality of elastomer particles filled in the cylinder 10 are elastically deformed in the rotary dampers 41, 51, 61, and 71. Frictional force between the elastomer particles and elastic repulsive force of the elastomer particles allow the rotary dampers 41, 51, 61, and 71 to generate torque (damping force).

Thus, the rotary dampers 41, 51, 61, and 71 according to the present invention can also successfully generate torque (damping force) without using a working fluid.

Furthermore, the rotors 640 and 740 of the rotary dampers 61 and 71 have the cross-sectional shapes orthogonal to the rotational central axes which are elliptical and polygonal, respectively. Therefore, the area of a surface in contact with the elastomer particles can be changed by changing the cross-sectional shape of the rotor into an elliptical shape or a polygonal shape like the rotors 640 and 740, whereby the degree of elastic deformation of the elastomer particles filled in the cylinder 10 can be variably changed. As the result, the characteristics of torque (damping force) generated by the rotary damper can be variably changed.

Furthermore, the rotors 440 and 540 in the rotary dampers 41 and 51 have the outer peripheral surfaces formed with the grooves 440C and the protrusions 540C in the axial direction, respectively. Therefore, the area of the surface in contact with the elastomer particles can be more variably changed by forming the grooves 440C or the protrusions 540C on the surface of the rotor, whereby the degree of elastic deformation of the elastomer particles filled in the cylinder 10 can be more variably changed. As the result, the characteristics of torque (damping force) generated by the rotary damper can be more variably changed.

The present invention is not limited to the first to eighth embodiments described above and explained with reference to the description and the drawings. For example, the following embodiments are included in the technical field of the present invention.

(1) In the first to eighth embodiments, the elastomer particles are elastic bodies made of silicone rubber having durometer A hardness of 40 and 60. However, the elastomer particles may be made of other materials as long as the materials are elastically deformable, or these materials may be compositely used. Furthermore, the durometer A hardness may range from 40 to 90.

(2) In each of the first to eighth embodiments, the particle diameters of the elastomer particles filled in the cylinder are uniform. However, elastomer particles having different particle diameters may be filled in the cylinder.

(3) In each of the first to eighth embodiments, the rod projects from each of the opening ends of the cylinder to the outside of the cylinder. However, the rod may project from one side of the rotor and project from one of the opening ends of the cylinder to the outside of the cylinder.

(4) In the fifth and sixth embodiments, grooves or protrusions are formed on the outer peripheral surfaces of the rotors respectively. However, the grooves and the protrusions both may be formed. Furthermore, the grooves or the protrusions may be formed on the surface of the elliptical or polygonal rotor. Furthermore, the number of grooves or protrusions to be formed is not limited to the numbers disclosed in the embodiments.

(5) In the first embodiment, ridges are formed between two adjacent surfaces of the four surfaces forming the square shape. However, the ridges are not limited to strict corners, and the ridges may be chamfered or may be formed by curved surfaces so that the two surfaces are continued.

[Reference Numerals]

10 ... cylinder (case)
40, 140, 240, 340, 440, 540, 640, 740 ... rotor
440C ... groove

540C ... protrusion
90 ... elastomer particles (particles)

**Claims**

1. A rotary damper comprising:

   a case (10), and
   a rotor (40, 140, 240, 340, 440, 540, 640, 740) disposed in the case (10) and rotatable around a rotational central axis,
   **characterized by** a plurality of particles (90) filled in the case (10) and having elasticity.

2. The rotary damper according to claim 1, wherein the rotor (40, 140, 240, 340, 440, 540, 640, 740) has a cross-sectional shape orthogonal to the rotational central axis, the cross-sectional shape being circular, elliptical or polygonal.

3. The rotary damper according to claim 1 or 2, wherein the rotor (440, 540) has a surface on which at least either a groove (440C) or a protrusion (540C) is formed in an axial direction thereof.

Fig.1A

Fig.1B

Fig.2A

Fig.2B

Fig.3A

Hardness 40

Fig.3B

Hardness 60

EP 3 428 473 A1

─✕─ Packing ratio 50%
─▲─ Packing ratio 60%
─●─ Packing ratio 70%

Fig.4B

Fig.4A

Fig.5A      Fig.5B      Fig.5C

Embodiment 2    Embodiment 3    Embodiment 4

EP 3 428 473 A1

Fig.6A Packing ratio 50%

Fig.6B Packing ratio 60%

Fig.6C Packing ratio 70%

# Fig. 7

## Fig.8A

Embodiment 5

41

440C

10

440A
(440)

440C

## Fig.8B

Embodiment 6

51

540C

10

540A
(540)

540C

## Fig.8C

Embodiment 7

61

10

640A
(640)

## Fig.8D

Embodiment 8

71

10

740A
(740)

Europäisches
Patentamt

European
Patent Office

Office européen
des brevets

## EUROPEAN SEARCH REPORT

Application Number

EP 17 00 1188

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 201 06 540 U1 (EBF INGENIEURGESELLSCHAFT FUER [DE]; RTW RUBBER TECHNOLOGY WEIDMANN [D) 13 September 2001 (2001-09-13) * page 3, paragraph second; figures 3, 4 * ----- | 1-3 | INV. F16F7/01 |
| X | US 3 747 915 A (HALL F) 24 July 1973 (1973-07-24) | 1 | |
| A | * column 4, line 43 - line 62 * * column 9, line 25 - line 32 * * figures 7, 8 * ----- | 2,3 | |
| | | | TECHNICAL FIELDS SEARCHED (IPC) |
| | | | F16F |

The present search report has been drawn up for all claims

| Place of search | Date of completion of the search | Examiner |
|---|---|---|
| The Hague | 4 January 2018 | Sommer, Jean |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   .................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 17 00 1188

This annex lists the patent family members relating to the patent documents cited in  the above-mentioned European search report.
The members are as contained in the European Patent Office EDP file on
The European Patent Office is in no way liable for these particulars which are merely given for the purpose of information.

04-01-2018

| Patent document<br>cited in search report | | Publication<br>date | Patent family<br>member(s) | Publication<br>date |
|---|---|---|---|---|
| DE 20106540 | U1 | 13-09-2001 | NONE | |
| US 3747915 | A | 24-07-1973 | NONE | |

EPO FORM P0459

For more details about this annex : see Official Journal of the European Patent Office, No. 12/82